# DEMANDE DE BREVET EUROPEEN

(11) **EP 1 541 409 A1**
(43) Date de publication de la demande: **15.06.2005**
(21) Numéro de dépôt: 04292828.3
(22) Date de dépôt: 30.11.2004
(51) Int. Cl.: B60N 2/48

(54) **Système de guidage et de blocage en translation d'une tige, notamment d'un appui-tête, comprenant une épingle de pincement**

(30) Priorité: 04.12.2003 FR 0350964
(71) Demandeur: Centre d'etude et de recherche pour l'automobile (CERA), 51100 Reims (FR)
(72) Inventeur: Ganier, David, 02190 Guignicourt (FR)
(74) Mandataire: Sayettat, Julien Christian

(57) **Abrégé**

L'invention concerne un système (1) de guidage et de blocage en translation d'une tige (2) comprenant une première (3) et une deuxième (4) encoches décalées axialement et disposées de part et d'autre de son axe Z, ledit système comprenant :
- une gaine (5) pourvue d'un orifice (6) destiné à recevoir en translation la tige (2) suivant un axe sensiblement colinéaire à l'axe Z,
- une épingle (8) comprenant une première (9) et une deuxième (10) branches reliées entre elles par une partie élastique (11), ladite épingle étant disposée dans ladite gaine avec lesdites branches disposées de part et d'autre de l'axe de l'orifice (6), ladite partie élastique étant agencée pour créer un appui desdites branches contre ladite tige une fois celle-ci disposée dans l'orifice (6) de sorte à pincer ladite tige et à permettre l'engagement de la première (9) - respectivement de la deuxième(10)- branche dans la première (3) - respectivement la deuxième (4)- encoche lorsqu'elles sont disposées en regard l'une de l'autre.

## Description

L'invention concerne un système de guidage et de blocage en translation d'une tige comprenant une première et une deuxième encoches décalées axialement et disposées de part et d'autre de l'axe de la tige, ainsi que l'application d'un tel système au blocage d'une tige dans deux positions extrêmes définies par les deux encoches.

Plus particulièrement, ce système est destiné au réglage en hauteur d'un appui-tête de véhicule automobile, de sorte à assurer le confort du passager tout en assurant sa sécurité.

La sécurité du passager est usuellement assurée par la présence d'un dispositif d'anti-extraction de l'appui-tête lors d'un choc et d'un dispositif assurant le maintien de l'appui tête à une hauteur minimale de sécurité qui ne peut être modifiée sans un outil approprié.

Les appuis-tête pour véhicules automobiles comprennent généralement un coussin d'appui monté sur le dossier du siège par l'intermédiaire de deux tiges montées coulissantes chacune dans une gaine montée dans l'appui-tête ou dans le dossier.

Usuellement, une tige est associée à un dispositif d'anti-extraction et l'autre à un dispositif de blocage de la translation en dessous de la hauteur de sécurité.

Dans certains cas, une même tige peut être associée aux deux dispositifs, mais au prix d'un agencement complexe de ces derniers au sein de la gaine correspondante.

Afin d'apporter une simplification notable aux réalisations existantes, l'invention propose un système simplifié de guidage et de blocage en translation d'une tige, remplissant à la fois une fonction d'anti-extraction et une fonction de blocage en translation de la tige en dessous de la hauteur de sécurité.

Le système selon l'invention est réalisé avec un nombre de composants limité, ce qui induit une simplification de sa fabrication et une réduction de son coût.

En outre, ce système est compatible avec, ou permet, le réglage en hauteur de l'appui tête entre les positions « d'anti-extraction » et de « hauteur de sécurité », afin de maintenir fermement l'appui-tête dans la position dans laquelle il a été réglé, notamment lors d'un choc.

A cet effet et selon un premier aspect, l'invention propose un système de guidage et de blocage en translation d'une tige, ladite tige comprenant une première et une deuxième encoches décalées axialement et disposées de part et d'autre de son axe Z, ledit système comprenant :
- une gaine pourvue d'un orifice destiné à recevoir en translation la tige suivant un axe sensiblement colinéaire à l'axe Z,
- une épingle comprenant une première et une deuxième branches reliées entre elles par une partie élastique, ladite épingle étant disposée dans ladite gaine avec lesdites branches disposées de part et d'autre de l'axe de l'orifice, ladite partie élastique étant agencée pour créer un appui desdites branches contre ladite tige une fois celle-ci disposée dans l'orifice de sorte à pincer ladite tige et à permettre l'engagement de la première -respectivement de la deuxième- branche dans la première -respectivement la deuxième- encoche lorsqu'elles sont disposées en regard l'une de l'autre.

Un tel système permet, au moyen d'un agencement simple, d'effectuer le blocage d'une tige dans deux positions prédéfinies par l'emplacement des encoches sur la tige.

En effet, la mise en regard d'une branche de l'épingle et de l'encoche correspondante induit, sous l'action de la partie élastique créant un pincement de la tige par l'épingle, un engagement de la branche dans l'encoche de sorte à bloquer la translation de la tige, ladite branche formant moyen de blocage de ladite translation.

Dans une réalisation, le système peut comprendre en outre une pièce associée à la gaine de façon mobile en translation, suivant un axe sensiblement perpendiculaire à l'axe Z, et agencée pour recevoir la tige en translation, ladite pièce étant en outre agencée pour permettre, lorsqu'elle est actionnée en translation, le déplacement radial d'une branche vers l'extérieur de l'orifice de sorte à permettre le désengagement de ladite branche d'une encoche et ainsi ia libre translation de la tige.

Cette pièce mobile peut se présenter sous la forme d'un « tiroir » pourvu d'un orifice destiné à recevoir la tige en translation. Afin de faciliter son actionnement, elle peut être prévue saillante par rapport à la gaine, de sorte à être actionnable par appui manuel.

Il peut en outre être prévu un orifice latéral dans la gaine, ledit orifice étant destiné à recevoir un outil permettant le déplacement de la deuxième branche lorsqu'elle est engagée dans la deuxième encoche, de sorte à permettre son désengagement et ainsi la libre translation de la tige.

Dans un cas particulier, le système peut être appliqué au blocage d'une tige dans deux positions extrêmes définies par les deux encoches, ladite tige pouvant coulisser entre ces deux positions par déplacement manuel.

La première et la deuxième encoches présentent un profil agencé pour permettre le désengagement de la branche correspondante dans le sens du coulissement du simple fait de la force appliquée pour créer ledit coulissement.

Une telle réalisation permet d'assurer un coulissement libre entre les deux encoches, sans actionnement d'une pièce mobile ou utilisation d'un outil, ces derniers étant mis en oeuvre lorsqu'il est souhaité un coulissement de la tige au delà de la zone délimitée par les encoches.

On peut prévoir un réglage discontinu de la tige entre les deux positions extrêmes, et ce par l'utilisation de crans disposés entre la première et la deuxième encoches, du côté de la première encoche, de sorte à permettre, par engagement de la première branche dans lesdits crans, le blocage de la tige suivant Z à des positions intermédiaires entre les deux positions extrêmes.

Le désengagement de la première banche de l'intérieur des crans peut être effectué, selon une réalisation, par actionnement en translation de la pièce mobile, ladite pièce prenant appui sur ladite branche de sorte à la désengager du cran dans lequel elle est engagée en position de blocage.

Dans un autre mode de réalisation, il peut être prévu que la surface de la tige soit lisse entre les deux encoches, un dispositif de blocage de ladite tige suivant Z étant prévu, de sorte à permettre son blocage suivant Z entre les deux positions extrêmes. Une telle réalisation permet un réglage continu de la tige entre ces deux positions.

Dans une application particulière, la tige est associée à un appui-tête pour siège de véhicule automobile, ledit système étant prévu dans le dossier du siège. La tige coulisse alors dans la gaine entre deux positions extrêmes, la première position extrême correspondant à « l'anti-extraction » et la deuxième position extrême correspondant à la « hauteur de sécurité ». Le système peut en outre être utilisé pour effectuer en position intermédiaire, un réglage par crans, ou discontinu, de l'appui tête par rapport au dossier de siège du véhicule automobile.

En variante, le système peut être prévu dans l'appui tête, la tige étant alors fixe par rapport au dossier de siège et coulissante dans une gaine montée fixe par rapport à l'appui-tête. Une telle réalisation permet de disposer d'un appui-tête à système de guidage et de blocage intégré.

D'autres particularités et avantages de l'invention apparaîtront dans la description qui suit, faite en référence aux figures jointes dans lesquelles :
- les figures 1 sont des vues en perspective respectivement éclatée et compacte d'un système de guidage et de blocage d'une tige selon un mode de réalisation ;
- la figure 2 est une vue en perspective d'une tige selon un mode de réalisation dans lequel des crans sont disposés entre une première et une deuxième encoches, ladite tige étant utilisable avec un système selon l'invention ;
- les figures 3 sont des vues partielles en perspective du système de la figure 1, respectivement dans une configuration de blocage et dans une configuration de désengagement de la tige depuis la première encoche ou depuis un cran ;
- les figures 4 sont des vues similaires aux figures 3 montrant par ailleurs un outil permettant de réaliser le désengagement de la tige depuis la deuxième encoche.

Le système 1 selon l'invention est destiné à permettre le guidage et le blocage en translation d'une tige 2 d'axe Z pourvue d'une première 3 et d'une deuxième 4 encoche.

Dans la suite de la description, les termes « axial » et « radial » ou « latéral » sont définis par rapport des plans respectivement parallèle et perpendiculaire à l'axe Z.

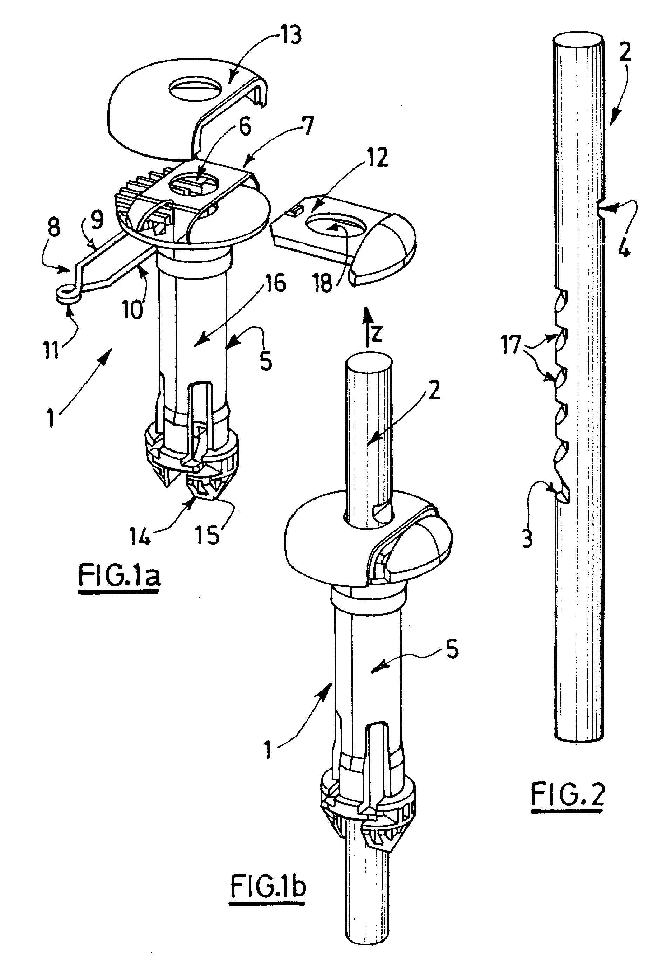

Le système 1 est représenté sur la figure 1 selon un mode de réalisation, et un mode de réalisation de la tige 2 est représenté sur la figure 2.

Cette tige 2 est pourvue d'une première 3 et d'une deuxième 4 encoches décalées axialement et disposées de part et d'autre de l'axe de la tige 2. Chaque encoche 3, 4 définit une position extrême dans laquelle la tige 2 est bloquée en translation. La tige 2 peut coulisser par déplacement manuel entre ces deux positions extrêmes.

Le système 1 selon l'invention comprend une gaine 5 destinée à recevoir en translation la tige 2 suivant un axe sensiblement colinéaire à l'axe Z de ladite tige. A cet effet, la gaine 5 comprend un orifice 6, s'étendant sur toute sa longueur, agencé pour permettre l'insertion et la translation de la tige 2.

La gaine 5 comprend une partie inférieure 14, formée de quatre doigts 15, et une partie intermédiaire 16 de forme sensiblement cylindrique, ces deux parties étant agencées pour permettre l'intégration de ladite gaine à un élément. En particulier, la gaine permet l'intégration du système dans un appui-tête pour siège de véhicule automobile ou dans la partie supérieure d'un dossier de siège.

La gaine 5 comprend en outre une partie supérieure 7, recouverte d'un enjoliveur 13, agencée pour recevoir une épingle 8, réalisée par exemple en métal, comprenant une première 9 et une deuxième 10 branche reliées entre elles par une partie élastique 11. L'épingle est disposée dans la gaine 5 de sorte à ce que les branches 9 et 10 soient disposées de part et d'autre de l'axe Z. La partie élastique 11 est agencée pour créer un appui des branches 9 et 10 contre la tige 2 une fois celle-ci disposée dans l'orifice 6 de sorte à pincer la tige 2 et à permettre l'engagement de la première 9 -respectivement la deuxième 10- branche dans la première 3 -respectivement la deuxième 4- encoche lorsqu'elles sont disposées en regard l'une de l'autre.

Dans le mode de réalisation représenté, le système 1 comprend en outre une pièce mobile 12, sous la forme d'un « tiroir », coulissant suivant un axe sensiblement perpendiculaire à l'axe Z. La pièce 12 est pourvue d'un orifice 18 destiné à recevoir la tige 2 en translation suivant l'axe Z et de forme essentiellement oblongue afin de permettre le coulissement de la pièce mobile 12.

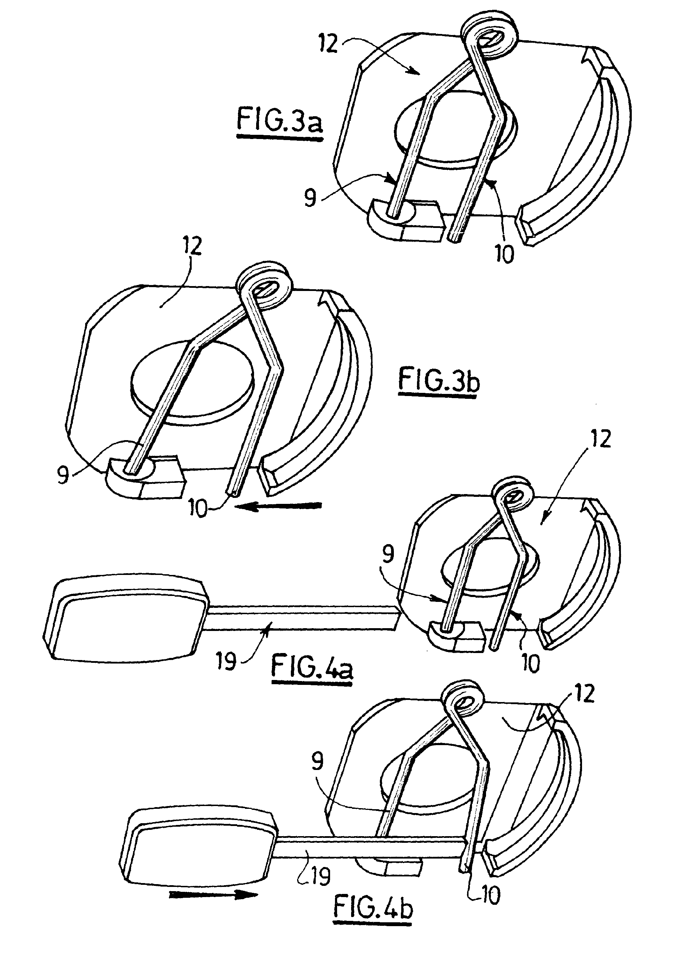

Afin de faciliter la compréhension du fonctionnement du système 1, les figures 3 et 4 ne font apparaître que l'épingle 8 et la pièce mobile 12, les autres composants de la gaine 5 ainsi que la tige 2 n'étant pas représentés.

Comme représenté sur la figure 3, la pièce 12 est agencée pour permettre, lorsqu'elle est actionnée en translation (figure 3b où la flèche représente le sens de la translation), le déplacement de la première branche 9 lorsqu'elle est engagée dans la première encoche 3 (figure 3a), de sorte à permettre son désengagement (figure 3b) et ainsi la libre translation de la tige 2.

Afin de faciliter son actionnement, la pièce mobile 12 est prévue saillante par rapport à la gaine 5, de sorte à être actionnable par appui manuel.

Il est prévu en outre un orifice latéral (non visible sur la figure 1) dans la gaine 5, ledit orifice étant destiné à recevoir un outil 19.

Comme représenté sur la figure 4, l'outil 19 permet le déplacement de la deuxième branche 10 (figure 4b où la flèche représente le sens d'actionnement de l'outil) lorsqu'elle est engagée dans la deuxième encoche 4 (figure 4a), de sorte à permettre son désengagement (figure 4b) et ainsi la libre translation de la tige 2.

Dans un cas particulier, le système 1 peut être appliqué au blocage d'une tige 2 dans deux positions extrêmes définies par les deux encoches 3, 4, ladite tige pouvant coulisser entre ces deux positions par déplacement manuel.

La première 3 et la deuxième 4 encoches présentent un profil agencé pour permettre le désengagement de la branche correspondante dans le sens du coulissement du simple fait de la force appliquée pour créer ledit coulissement. Pour ce faire, les encoches présentent chacune une rampe.

Ainsi, la tige se trouvant dans la première position extrême, la branche 9 est engagée dans l'encoche 3. En exerçant une pression sur la tige 2, la branche 9 glisse sur la rampe de l'encoche 3 libérant la translation de la tige 2 vers le bas. Inversement, la tige se trouvant dans la deuxième position extrême, la branche 10 est engagée dans l'encoche 4. En exerçant une traction sur la tige 2, la branche 10 glisse sur la rampe de l'encoche 4 libérant la translation de la tige 2 vers le haut.

Selon la réalisation représentée en figure 2, la tige 2 comprend en outre des crans 17 disposés entre la première 3 et la deuxième 4 encoches, du côté de la première encoche 3, de sorte à permettre, par engagement de la première branche 9 dans les crans 17, le blocage de la tige suivant Z à des positions intermédiaires entre les deux positions extrêmes définies par les encoches 3 et 4.

Le désengagement de la première banche 9 est effectué par actionnement en translation de la pièce mobile 12, ladite pièce prenant appui sur ladite branche de sorte à la désengager du cran 17 dans lequel elle est engagée en position de blocage de la tige 2.

En variante représentée, il peut être prévu que la tige (2) soit lisse entre la première (3) et la deuxième (4) encoches, un dispositif de blocage étant prévu par ailleurs pour bloquer la tige (2) entre les deux positions extrêmes.

## Revendications

1. Système (1) de guidage et de blocage en translation d'une tige (2), ladite tige comprenant une première (3) et une deuxième (4) encoches décalées axialement et disposées de part et d'autre de son axe Z, ledit système comprenant :
- une gaine (5) pourvue d'un orifice (6) destiné à recevoir en translation la tige (2) suivant un axe sensiblement colinéaire à l'axe Z,
- une épingle (8) comprenant une première (9) et une deuxième (10) branches reliées entre elles par une partie élastique (11), ladite épingle étant disposée dans ladite gaine avec lesdites branches disposées de part et d'autre de l'axe de l'orifice (6), ladite partie élastique étant agencée pour créer un appui desdites branches contre ladite tige une fois celle-ci disposée dans l'orifice (6) de sorte à pincer ladite tige et à permettre l'engagement de la première (9) - respectivement de la deuxième(10)- branche dans la première (3) - respectivement la deuxième (4)- encoche lorsqu'elles sont disposées en regard l'une de l'autre.

2. Système selon revendication 1, **caractérisé en ce qu'**il comprend en outre une pièce (12) associée à la gaine (5) de façon mobile en translation, suivant un axe sensiblement perpendiculaire à l'axe Z, et agencée pour recevoir la tige (2) en translation, ladite pièce étant en outre agencée pour permettre, lorsqu'elle est actionnée en translation, le déplacement radial d'une branche (9) vers l'extérieur de l'orifice (6) de sorte à permettre le désengagement de ladite branche d'une encoche (3).

3. Système selon la revendication 1 ou 2, **caractérisé en ce que** la gaine (5) est pourvue d'un orifice latéral destiné à recevoir un outil (19) permettant le déplacement de la deuxième branche (10) lorsqu'elle est engagée dans la deuxième encoche (4), de sorte à permettre son désengagement.

4. Application d'un système selon l'une quelconque des revendications 1 à 3 au blocage d'une tige (2) dans deux positions extrêmes définies par les deux encoches (3, 4), ladite tige pouvant coulisser entre ces deux positions par déplacement manuel.

5. Application selon la revendication 4, **caractérisée en ce que** la première (3) et la deuxième (4) encoches présentent un profil agencé pour permettre le désengagement de la branche (9, 10) correspondante dans le sens du coulissement.

6. Application selon ia revendication 4 ou 5, **caractérisée en ce que** des crans (17) sont disposés entre la première (3) et la deuxième (4) encoche, du côté de la première encoche (3), de sorte à permettre, par engagement de la première branche (9) dans lesdits crans, le blocage de la tige (2) suivant Z entre les deux positions extrêmes.

7. Application selon la revendication 6 lorsqu'elle dépend de la revendication 2, **caractérisée en ce que** le désengagement de la première banche (9) de l'intérieur des crans (17) est effectué par actionnement en translation de la pièce mobile (12).

8. Application selon la revendication 4 ou 5, **caractérisée en ce que** la surface de la tige (2) est lisse entre les deux encoches (3, 4) et **en ce qu'**un dispositif de blocage de ladite tige suivant Z est prévu, de sorte à permettre son blocage suivant Z entre les deux positions extrêmes.

9. Application selon l'une quelconque des revendications 4 à 8, **caractérisée en ce que** la tige (2) est associée à un appui-tête pour siège de véhicule automobile, le système (1) étant prévu dans le dossier du siège.

10. Application selon l'une quelconque des revendications 4 à 8, **caractérisée en ce que** la tige (2) est associée à un appui-tête pour siège de véhicule automobile, le système (1) étant prévu dans l'appui tête.
